# EUROPEAN PATENT SPECIFICATION

(11) **EP 3 289 252 B1**
(45) Date of publication and mention of the grant of the patent: **18.09.2019**
(21) Application number: 16723810.4
(22) Date of filing: 29.04.2016
(51) Int. Cl.: F16K 3/14, F16K 3/18, F16K 3/314, B63B 27/34, F16L 37/30

(54) **IMPROVED COUPLING AND METHOD THEREOF**
VERBESSERTE KUPPLUNG UND VERFAHREN DAFÜR
RACCORD AMÉLIORÉ ET PROCÉDÉ ASSOCIÉ

(30) Priority: 30.04.2015 GB 201507383
(43) Date of publication of application: 07.03.2018
(73) Proprietor: Self Energising Coupling Company Limited, Northwich, Cheshire CW9 6GG (GB)
(72) Inventor: READMAN, Matt, Northwich Cheshire CW9 6GG (GB)
(74) Representative: Appleyard Lees IP LLP
(86) International application number: PCT/GB2016/051262
(87) International publication number: WO 2016/174478

(56) References cited:
- WO-A1-2014/167343
- DE-A1- 3 227 578
- GB-A- 1 161 090
- US-A- 3 305 208
- US-A- 4 779 649
- US-A1- 2012 256 111

## Description

The present invention relates to an improved coupling and method of coupling two pipelines, and particularly suitable for use in oil and gas pipelines.

Various couplings in oil and gas pipelines are known. The type of coupling chosen is generally dependent on the circumstances in which the coupling will be used. One known type of coupling is known as a double-block and bleed coupling. Typically formed of two, inline ball valves coupled at either side of a pipeline, a block and bleed coupling enables both sides of the coupling to be sealed so that a bleed valve cab be arranged to bleed the space between the two ball valves in order to ensure the valves have correctly closed. Double block and bleed couplings are manually activated.

An alternative coupling is known as a marine breakaway coupling. Marine breakaway couplings are used to protect parts of the pipeline from damage due to unexpected loads. For instance, a marine breakaway coupling is placed in the hose assembly at a manifold or other fixed pipe connector, such as a hose to steel connector, and arranged to automatically separate when a pre-set force acting across the coupling is exceeded. Known marine breakaway couplings comprise petal valves that are biased to close either side of the coupling when the coupling separates. When the coupling breaks apart, the petals close and the two ends of the coupling close to prevent fluid loss.

Couplings have to cope with a number of factors. For instance, often, marine breakaway couplings are required to float or to fit within limited, predefined envelopes. Both these applications make the larger and heavier ball valves incompatible. Also, because the petal valves are not easily separated for maintenance or servicing to the valves, the marine breakaway couplings using petal valves, which may have a service life of many years are left on standby for the overload pressure without knowing that the valves will work when needed. Surge protection is also a consideration. Surges can occur when closing a pipeline. The surge can occur from within the pipeline. Here, the oil, for instance, flowing through the pipeline, hits the closed valve and the shockwave travels back along the coupling, which can cause damage to sensitive equipment. Also, once a one-way petal valve is closed, it has been found that if the broken pipeline is left floating on the water surface, waves or wind can act against the one-way valve, opening the valve causing unwanted fluid egress.

DE 3227578 A1 describes a gate valve for a flow containing solids having a separate shut-off plate. WO 2014/167343 A1 describes a valve for a fluid line having in each part a valve member movable between open and closed positions for shutting off fluid flow. GB 1161090 A describes a sluice valve which may be opened or closed by rotation of a screw threaded valve rod in screw threaded connection with a valve member. US 3305208 A describes a segmental valve stem connection. US 4779649 A describes a gate valve with a camming wedge.

It is an object of the present invention to provide an improved coupling that address one of the above or other disadvantages. It is a further aim to provide a coupling that can provide a base platform that can be deployed across a wider application of couplings. It is a further aim to provide a coupling operable as a marine breakaway coupling that can be separated for general maintenance and servicing without decommissioning the coupling. It is a further aim to provide a coupling having improved surge protection.

According to the present invention there is provided a valve, a valve assembly comprising the valve, and a method of closing a valve as set forth in the appended claims. Other features of the invention will be apparent from the dependent claims, and the description which follows.

In the exemplary embodiments a shuttle slides across a valve, which forms a coupling, from an open position to a closed position. In the open position, the shuttle is arranged to allow fluid to pass through the valve. In the closed position the shuttle is arranged to close the valve. The shuttle carries a tablet that is biased to move relative to the shuttle to seal against a sealing surface and thereby plug the valve closed. In a one-way valve application, fluid pressure acts upon the side of the tablet to assist in urging the tablet against the sealing surface. Alternatively, surge protection can be provided by biasing the tablet to move towards the sealing surface against the fluid pressure. Combining two valves to form the coupling, the coupling can be arranged to be separated with the two valves closed. The coupling can include a first bleed valve that accesses the space between the two sealing surfaces so that the space can be bled after closing the valves. The two valves are coupled together by a clamping mechanism to form the coupling. The clamping mechanism can be manually released, as in a block and bleed application, or arranged to automatically release under a predetermined load, as in a marine breakout application. Advantageously, the same base platform can be used in both applications.

In the exemplary embodiments, the sealing surface is provided on a valve body. Advantageously, the shuttle does not therefore require a sealing arrangement with the valve body. The valve body houses the shuttle in a slideable manner. The tablet is caused to move axially so as to engage the sealing surface of the valve body. Advantageously, the shuttle covers the sealing surface when in the open position. The sealing surface is therefore protected from damage during fluid transmission. The tablet includes a chamfered edge that acts against a corresponding chamfered edge on the valve body. Consequently, as the shuttle is moved from the closed towards the open position, the chamfered surfaces abut each other and the chamfer is arranged such that the sliding movement of the shuttle urges the tablet to move axially back, away from the sealing surface and against the bias. Abutment between the valve body and tablet maintains the tablet in position within the shuttle against the bias. When moving from the closed to the open position, the shuttle moves relative to the valve body and when in the closed position, the tablet is free from abutment holding the tablet against the bias of the spring and the tablet is therefore free to move with the bias relative to the shuttle and valve body.

In the exemplary embodiments, the tablet includes a corresponding sealing surface to the sealing surface against which the seal is made to close the valve. Suitably, the sealing surface of the tablet is stepped back from an adjacent part of the tablet. Here, preferably, the central portion of the tablet, surrounded by the sealing surface protrudes in the closing direction. Consequently, as the shuttle slides, the central, protruding surface bears against the valve body, protecting the sealing surface from any wear. Advantageously, a transition between the central, protruding surface and the sealing surface of the tablet is tapered so that, as the shuttle is moved from the closed position, the tapered surface bears against a corresponding surface of the valve body and urges the tablet against the biasing force.

In one exemplary embodiment, a second bleed valve is arranged to access the space between the two sealing surfaces. This enables the space between the two tablets to be flushed and cleaned. Suitably, the second bleed valve is arranged to oppose the first relative to an axial direction of the coupling.

In the exemplary embodiments, the shuttle includes a second tablet moveably mounted. The second tablet is reversed to the first tablet in an axial direction of the coupling. A resilient member is arranged between the two tablets to provide the bias to urge the tablets apart.

In a one-way valve application, one of the tablets is arranged to allow fluid to pass around or through the tablet. Thus, the fluid passes the tablet and acts on the fluid side of the other tablet. Here, fluid pressure urges the tablet against the sealing surface. For example, the tablet is perforated to include a plurality of holes through which fluid passes. The second tablet is urged against a stop, so that the resilient member acts to push both tablets against a surface. In the one-way valve application, if the open side of the first tablet is forced against the biasing pressure from the resilient member and any fluid pressure acting with the bias of the resilient member, the tablet can move away from sealing engagement with the sealing surface therefore opening the valve.

In one exemplary embodiment of the one-way valve, the first tablet that seals against the sealing surface to close the valve is arranged on a downstream-side of the valve and the second tablet is arranged on an upstream side relative to the first tablet. Here, the fluid pressure within the pipeline acts with the closing bias of the first tablet against the sealing surface. In another exemplary embodiment of the one-way valve, the first tablet that seals against the sealing surface to close the valve is arranged on an upstream-side of the valve and the second tablet is arranged on a downstream side relative to the first tablet. Here, the fluid pressure within the pipeline acts against the bias of the first tablet against the sealing surface. Consequently, if fluid pressure within the pipeline exceeds a bias force of the bias closing the first tablet, the tablet is caused to move away from the sealing surface and therefore open, releasing fluid and therefore pressure. Advantageously, the bias force can be set to open in the event of a fluid surge, therefore reducing the shock wave effect of the surge and protecting upstream equipment.

In the exemplary embodiments a two-way valve is provided by forming both the first and second tablets as plugs that seal against sealing surfaces. Here, the sealing surfaces are opposed to and face each other. Each tablet is biased towards the respective sealing surface by the resilient member. The bias of the tablet on the upstream side of the valve acts against fluid pressure within the pipeline. If the fluid pressure does not exceed the bias, the tablet seals the passageway. As the pressure increases, the resilient member is compressed. Here, the upstream side tablet may move away from its sealing surface, however, the fluid pressure now acts to urge the second tablet against its respective sealing surface and the valve remains closed by the other tablet wherein the fluid pressure acts with the bias of the resilient member. the valve is a two-way valve as the same happens in reverse upon downstream pressure.

In the exemplary embodiments, each tablet is castellated along a rear edge of a front surface that seals against the sealing surface. The castellation's provide a plurality of spaced recess around the peripheral rear edge to aid the flow of fluid around the tablet when the front surface does not seal against the sealing surface. Preferably, each recess provides a sloped surface undercutting the front surface

In the exemplary embodiments, each tablet includes a recess on a rear face to locate the resilient member. The resilient member may be a plurality of members and the rear face therefore has a plurality of recesses. Suitably, each resilient member is a compression spring and the recesses therefore blind bores in the rear face.

In the exemplary embodiments, each sealing surface is a face seal. The face seal is suitably larger than the cross-sectional area of the fluid passageway. The face seal may be a metal to metal seal or an elastomeric ring seal as is known in the art.

In one exemplary embodiment, the shuttle is moved within a valve body to slide transverse the fluid passageway from an open position to a closed position. The shuttle is moved by an actuator. The actuator may be a direct drive mechanism, wherein the moving force is input as a linear motion, or the actuator may translate a rotational movement into the necessary linear movement, such as a rack and pinion drive. In one exemplary embodiment, the actuator is a hydraulic piston. When used as a block and bleed coupling, the actuator is actuated manually. In a marine breakaway coupling, the actuator is actuated automatically upon decoupling of the two valves forming the coupling. Here, in one exemplary embodiment, a hydraulic piston forms part of the actuator. At least one, and preferably two, hydraulic pistons are pressurised to bias the shuttle to slide to the closed position. The shuttle is maintained in the open position by a restrictor that is automatically removed upon decoupling. For instance, the restrictor may be a further hydraulic piston, wherein fluid within the restrictor is prevented from release by a plug thereby forming a hydraulic lock. The plug is formed on the other valve, such that upon decoupling the plug is automatically removed. Fluid in the restrictor is released to allow the shuttle to move under the bias of the hydraulic pistons. Advantageously, the rate of closure of the shuttle across the valve is controlled by the egress rate of the fluid from the restrictor. The speed the shuttle moves to the closed position is therefore controllable by the size of hole through which the fluid egresses.

In the exemplary embodiments a clamp is formed between two valves to provide a coupling. The clamp may be a toggle clamp or other mechanism known in the art for manual joining of the valves, for instance in a block and bleed application. Alternatively, for instance in a marine breakaway application, the clamp may include a breakout member designed to fracture under a predetermined load. For instance a tension pin clamps the two valves and the valves are able to separate upon fracture of the tension pin under a predetermined force.

According to the exemplary embodiments, there is therefore provided a method of closing a valve by moving a shuttle transverse a fluid passageway from an open position to a closed position, wherein when the shuttle is in the closed position, the passageway is plugged by movement of a tablet relative to the shuttle in an axial direction of the fluid passageway. There is also provided a method of opening a valve comprising causing the tablet to moved in the reverse axial direction, away from sealing engagement with the valve body and sliding the shuttle transverse the fluid passageway from the closed to open positions.

In the exemplary embodiments, the method comprises using a valve of the preceding aspects. In particular, the method may comprise causing two tablets to move axially away from each other to plug against two sides of the valve body. The method may comprise causing a tapered surface of the tablet to bear against the valve body when the shuttle is moved from the closed position to the open position, wherein said bearing causes the tablet to move against the biasing force.

For a better understanding of the invention, and to show how embodiments of the same may be carried into effect, reference will now be made, by way of example, to the accompanying diagrammatic drawings in which:
Figure 1 shows a perspective view of a coupling according to an exemplary embodiment in a coupled configuration;
Figure 2 shows a partial cutaway perspective view of the coupling of figure 1 in a decoupled configuration;
Figure 3 shows a partial cutaway perspective view of a shuttle for use in a valve forming the coupling of figure 1;
Figure 4 shows a front and rear perspective view of a tablet for use in the shuttle of Figure 3;
Figure 5 shows a partial cutaway perspective view of an alternative shuttle;
Figure 6 shows a perspective view of a coupling according to an exemplary embodiment in a coupled configuration;
Figure 7 shows a perspective view of the coupling of figure 6 in a decoupled configuration;
Figure 8 shows an alternative shuttle for use in a valve forming the coupling of figure 6 and 7;
Figures 9a, b and c show cross-sectional views through a valve and of stages of a process of closing a valve; and
Figure 10 shows a cross-sectional view through a portion of a valve in the closed position.

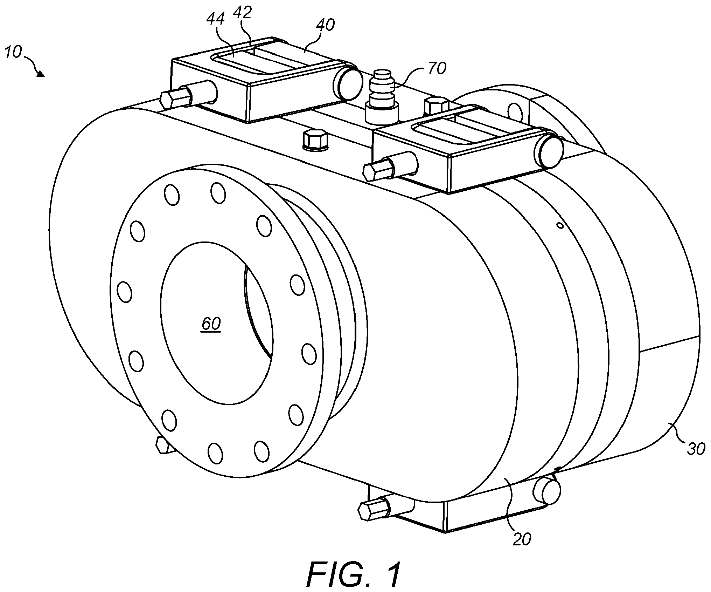

Referring to Figure 1, a coupling 10 is provided. The coupling 10 comprises a first valve 20 coupled to a second valve 30. A clamping mechanism 40 clamps the two valves together to form the coupling. The clamp 40 compresses the two valves together to mate a seal between the two valves. Each valve includes a fluid passageway 60 and the two fluid passageways are in fluid communication when the valves are coupled to allow fluid to pass through the coupling. As will be described herein, one of the valves includes a closing mechanism to close the fluid passageway. However, the couplings will be described herein wherein both valves include a closing mechanism so that, when separated, both ends of the coupling can be closed. When coupled, the closing mechanisms can be opened to allow fluid to pass through the coupling.

Figure 1 shows a coupling suitable for use as a block and bleed application. The clamping mechanism 40 comprises a toggle clamp. Suitably, the toggle clamp is shown as a plurality of toggle clamps arranged symmetrically about the coupling. The toggle clamp comprises a pivotable stirrup 42 applied over a protrusion 44 of the other part as is known in the art. The toggle clamp can be removed to decouple the valves. In Figure 1, a bleed valve 70 is shown. The bleed valve is openable to vent the space between the closing mechanisms of each valve. Thus, when the valve is to be separated, the closing mechanisms can be shut and the bleed valve 70 opened to check that valves have been properly closed. In the exemplary embodiments, a second bleed valve (not shown) is provided on the opposite side to the first. Advantageously, both bleed valves can be opened to flush the space between the two closing mechanisms prior to decoupling.

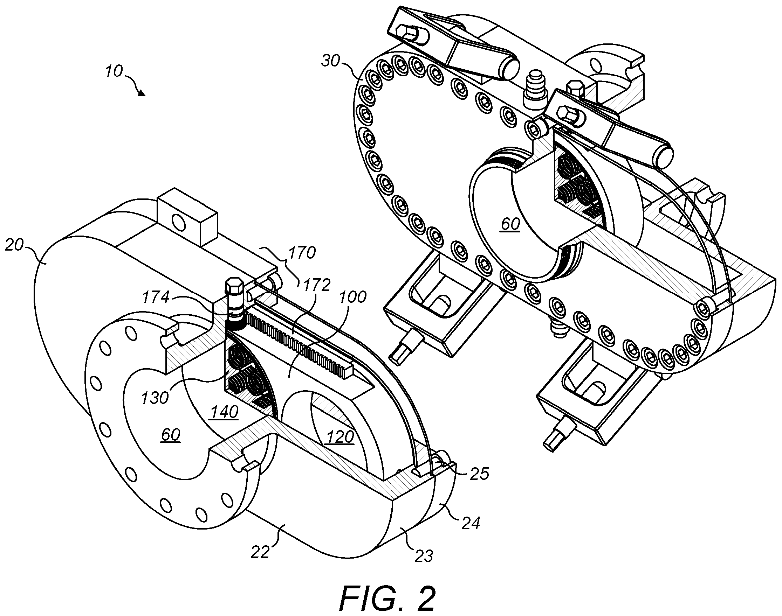

Referring to Figure 2, the coupling is shown in a decoupled configuration. Although not necessary, in the exemplary embodiments, the closing mechanism of each valve is substantially the same. Consequently, only one will be described herein. The valve 20 is formed from a valve body 22. The valve body is shown as two parts 23, 24, secured together by fastenings 25 to allow manufacture of a single sealed body, but other configurations are envisaged. A shuttle 100 is provided within the valve body 23. The shuttle is mounted within the valve body 23 so as to be able to slide from an open position to a closed position. The valve is shown in Figure 2 is the closed configuration. In the open position, the shuttle allows fluid to pass through the valve. In the closed position, the shuttle plugs the valve body to close the valve.

Suitably, the shuttle is shown as a body 110 defining a first area and a second area. In the open position the first area is arranged across the fluid passageway 60. The first area is shown suitably as including an aperture 120 through the body 110. Suitably, the aperture is sized to correspond to the cross sectional area of the fluid passageway so that in the open position the fluid passageway is substantially unobstructed. Here, the surfaces of the valve body surrounding the aperture are covered by the shuttle to prevent damage. The second area comprises an aperture 130 within which a tablet 140 is arranged. The tablet 140 is biased to move in the direction of the fluid path relative to the shuttle body 110. In the exemplary embodiments, the tablet 140 is biased by resilient members shown as compression springs 142. The tablet 140 is biased against a sealing surface of the valve body. The sealing surface surrounds the fluid passageway 60 such that when the tablet seals against the sealing surface the passageway 60 is closed.

The shuttle moves between the open and closed positions by linear movement relative to the valve body. The linear movement is angled across the fluid passageway and preferably transverse thereto. Typically, the tablet is biased to extend from the shuttle body in the fluid direction, such as axially. Here, the tablet includes chamfered edges that cooperate with chamfered edges of the valve body adjacent the sealing surface to urge the tablet against the bias to withdraw back into the shuttle body to enable the shuttle to be opened. An actuator controls the linear movement of the shuttle within the valve body. In Figure 2, the actuator 170 is shown as a rack and pinion mechanism. Here, a linear rack of gear teeth 172 are formed on the shuttle and a pinion gear 174 is housed in the valve body. Rotation of the pinion gear translates the rack to move the shuttle in the linear direction to open or close the valve.

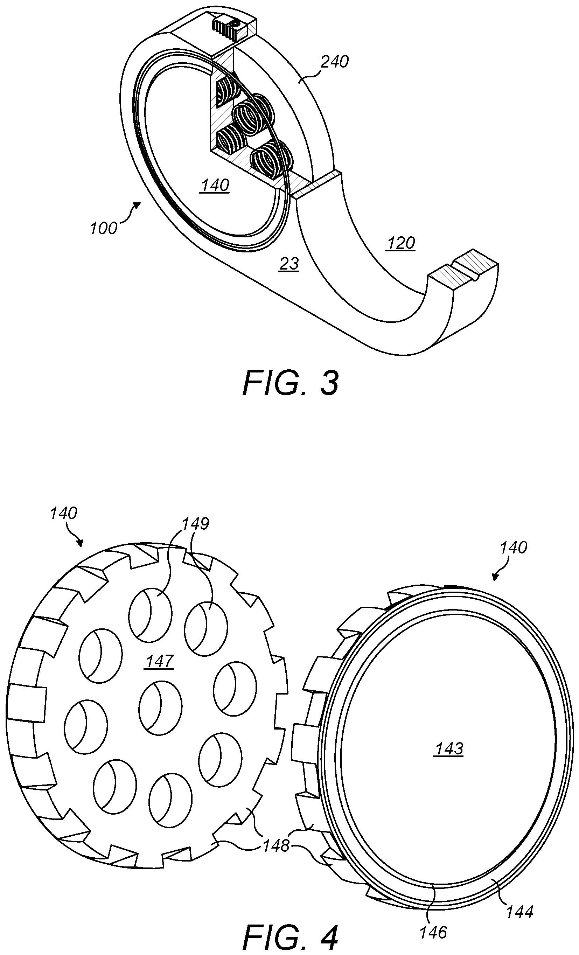

Figure 3 shows an exemplary shuttle 20. The tablet is a solid body. The tablet 140 can be biased to close against the fluid pressure within the fluid passageway 60 closed by the valve or to close with the fluid pressure. When the tablet is arranged to close against the fluid pressure, surge protection is provided as when the fluid pressure surges and exceeds the bias closing the tablet against the sealing surface, the fluid pressure moves the tablet away from the sealing surface to open the valve and release pressure thereby reducing the shock wave back upstream.

Figure 4 shows an exemplary tablet 140. The tablet provides a solid front face 143 and is shown suitably as being substantially circular. The peripheral edge 144 of the front face 143 is shown as being tapered to assist opening of the valve. Seal area 146 provides a continuous face seal to seal against the sealing surface of the valve body. The seal may be an elastomeric seal or a metal-to-metal seal or other seal known in the art. A rear peripheral face 147 of the tablet 140 includes recesses 149 for locating the resilient members. A peripheral edge 148 of the rear face is suitably shown as being castellated. The castellation's are a plurality of recesses undercutting the front surface 143 and are provided to enable fluid flow around the tablet when the tablet is not in sealing contact with the valve body.

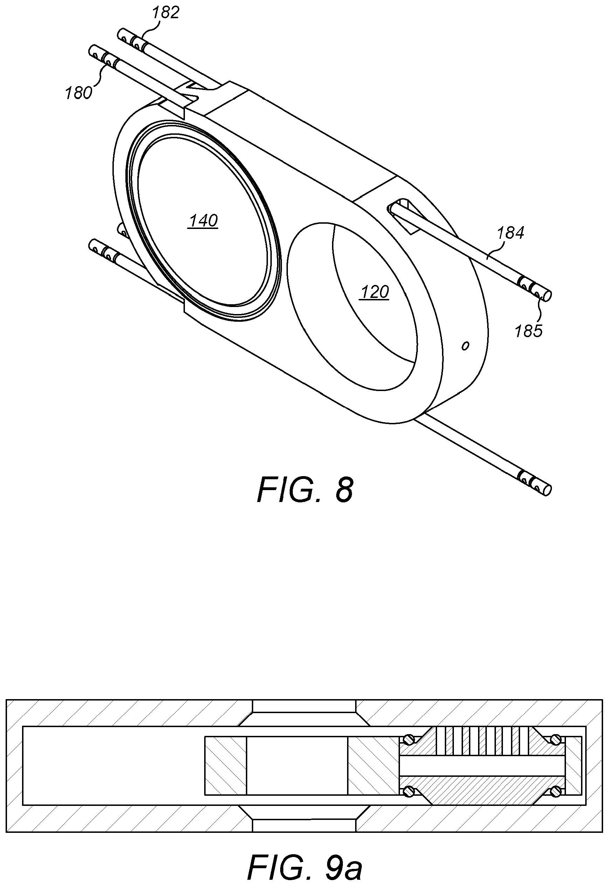

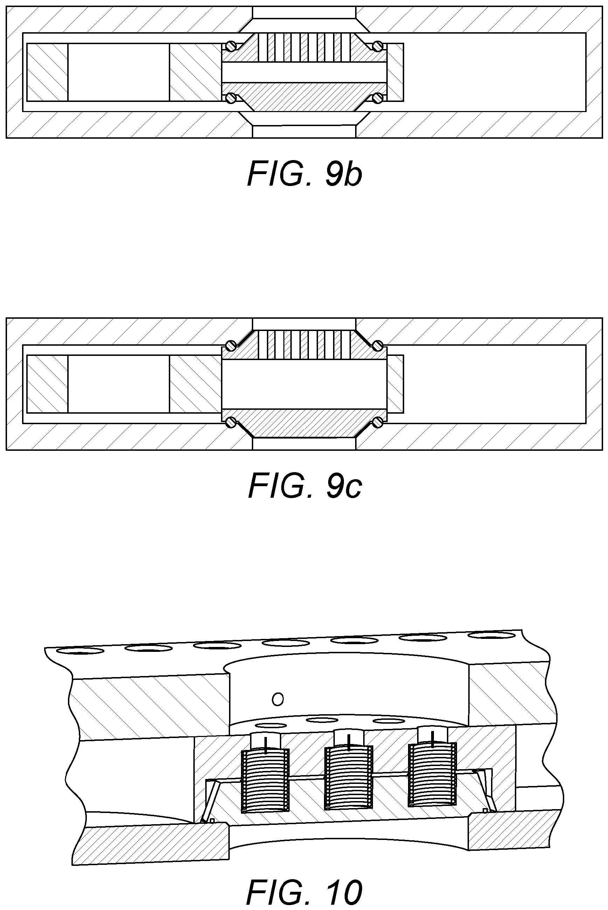

Referring to Figure 9, an exemplary embodiment shows the shuttle housing two tablets biased apart in the axial direction. In the open position, Figure 9a, the tablets bear against the surfaces of the valve body. Each tablet carries a seal, suitably shown as an O-ring seal, but may also be other known seals such as metal-to metal seals. The seals enclose a central area of the tablet. The central area protrudes from the edge are housing the seal such that the central area provides the bearing surface against which the tablet pushes against the valve. Consequently, as the shuttle slides, the seals and sealing surface does not bear against the valve body. In Figure 9b the shuttle is shown in the closed position. The tablets are free to move outwardly under the biasing force to plug the valve. Referring to Figure 9c, the valve can be opened by sliding the shuttle back towards the open position. In doing so, a tapered surface between the outer sealing surface and the central protruding surface of the tablets, bears against a corresponding surface of the valve body. The abutment between the tapered surface and the valve body, causes the tablets to be urged toward each other disengaging the seals and allowing the tablets to move back to the position of Figure 9a. Figure 10 shows a similar cross-sectional view, wherein a single tablet is provided and the biasing means act between the tablet and the shuttle. The protruding central section of the tablet and tapered surface is shown to enable the tablet to withdraw away from the seal and allow the valve to open.

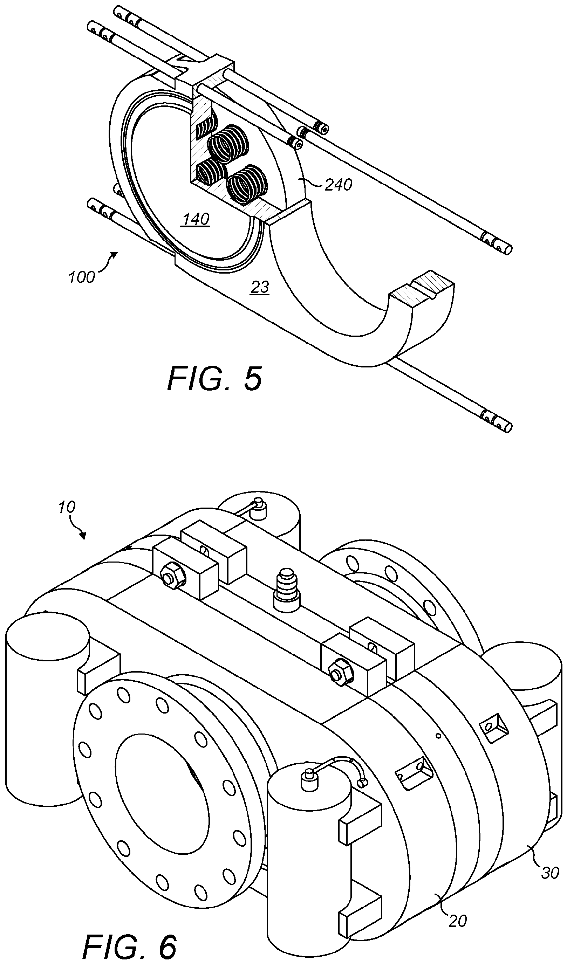

In the exemplary embodiment shown in Figure 5, the shuttle 20 carries first and second tablets. The first 140 and second 240 tablets are arranged within the aperture 130 of the second area and are each biased outwardly. Here the resilient member acts between the two tablets. It will be appreciated that the second tablet is similar to the first tablet so the features of the first tablet are applicable to the second. In one exemplary embodiment, the second tablet 240 provides a location against which the resilient member acts. The second tablet 240 may therefore not seal the fluid passageway 60 when biased outwardly. Here, the valve acts similarly to as described before. The second tablet 240 may include through apertures or perforations to allow fluid to pass. Alternatively, the second tablet is also solid and biased towards a sealing arrangement with a corresponding sealing surface of the valve body. Here, a two-way valve is provided such that the valve closes the passageway when pressure is applied from either side.

Figure 6 shows an alternative embodiment of the coupling configured to act as a marine breakaway coupling. Here, the coupling may be configured to float and therefore include a buoyancy covering (not shown) as is known in the art. Advantageously, the marine breakaway operates a similar platform to the previous embodiment described in relation to a block and bleed configuration and therefore only the differences will be explained in detail.

Rather than manually operated toggle clamps or the like, the two valves 20, 30 are clamped together by a breakout mechanism. Breakout mechanisms are known in the art and designed to fracture under a predetermined force. Once fractured, the valves can decouple. Advantageously, because the same platform is used, the marine breakaway coupling is provided with a block and bleed functionality which enables the marine breakaway coupling to be decoupled for service or maintenance to the coupling.

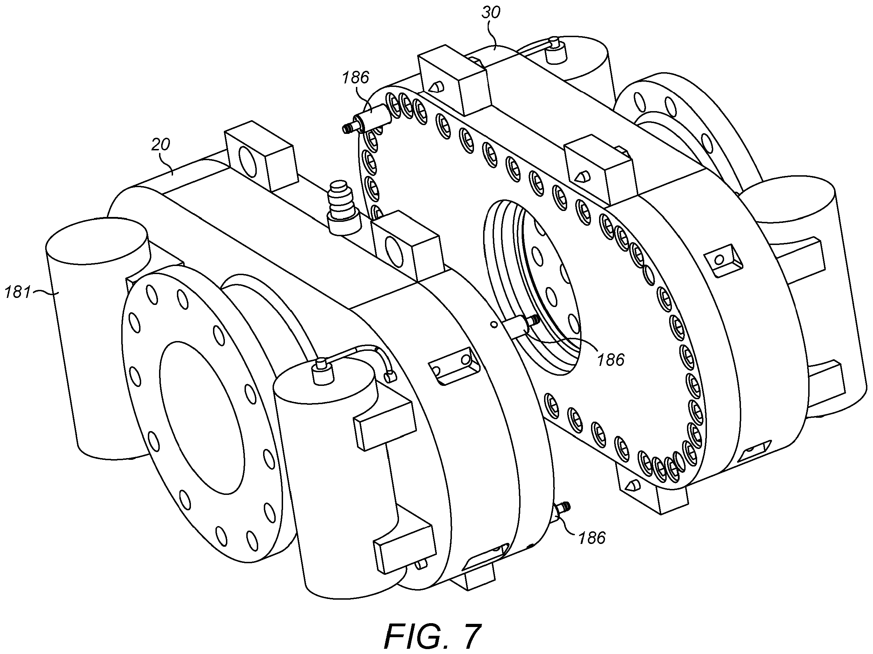

Furthermore, the marine breakaway embodiment includes an automatic closing mechanism to move the shuttles from the open to the closed positions automatically upon decoupling of the valves. An exemplary automatic closing mechanism is described with reference to figure 7 and 8. Here, the closing mechanism 170 comprises a hydraulic piston 180 that is pressurised to bias the shuttle to the closed position. An accumulator 181, as is known in the art is provided to supply the fluid pressure to the hydraulic piston. Also as is known in the art, a second hydraulic piston is provided for redundancy should the first hydraulic piston fail for any reason. A further hydraulic piston 184 is provided to act as a hydraulic lock preventing movement of the shuttle relative to the valve body. The hydraulic lock is provided by closing the piston 184 to prevent fluid egress therefrom. An aperture 185 is provided in the piston 184. When the two valves ae coupled a plug 186 formed on the other of the valves is arranged to seal the aperture preventing fluid egress. Upon decoupling the plug is removed from the aperture and the fluid allowed to escape. As the fluid escapes, the hydraulic lock is broken and the shuttle therefor removes under the bias on the hydraulic pistons 180, 182. Force symmetry is preferably provided by repeating the closing mechanism on the opposing side of the shuttle.

There is therefore provided an improved valve that provides a platform for an increased number of applications. There is also provided a method of operating a valve comprising moving a shuttle transverse a fluid passageway and causing a tablet to plug the passageway by axial movement.

Although a few preferred embodiments have been shown and described, it will be appreciated by those skilled in the art that various changes and modifications might be made without departing from the scope of the appended claims.

## Claims

1. A valve (20) comprising:
a valve body (22) having a passageway (60) there through defining an axial direction;
a shuttle (120), mounted within the valve body (22) and able to move from an open position to a closed position at an angle to the axial direction;
wherein, in the open position, the shuttle (120) does not close the passageway and in the closed position, the shuttle (120) is arranged to locate a first tablet (140) within the fluid passageway (60);
the first tablet (140) being moveably mounted on the shuttle (120) and biased to move in the axial direction to seal against a sealing surface of the valve body to close the passageway;
wherein the shuttle carries a second tablet (240), the tablets being biased apart in the axial direction to seal against opposed sealing surfaces in the valve body (22)
**characterised in that**
one of the tablets (140, 240) includes apertures (149) to allow fluid to pass around or through said tablet, and
a resilient member is arranged between the first tablet and the second tablet to bias the first tablet and the second tablet apart.

2. The valve (20) of any preceding claim, wherein one or both tablets includes a protruding surface and a sealing surface, wherein the protruding surface protrudes forward of the sealing surface in the axial direction.

3. The valve (20) of claim 2, wherein a transitional surface between the protruding surface and the sealing surface is arranged to bear against the valve body (22) to move said tablet against the biasing force in the opposite axial direction when the shuttle (120) is moved from the closed position to the open position.

4. The valve (20) of any preceding claim wherein a rear surface of one or both tablets is castellated.

5. The valve of any preceding claim wherein the shuttle (120) is moveable relative to the valve body (22) by an actuator.

6. A valve assembly (10) comprising first (20) and second (30) valves, wherein each valve is as claimed in any preceding claim.

7. The valve assembly (10) of claim 6, wherein a first and second bleed holes are provided through the valve bodies so as to be in communication with the space between the two shuttles so as to flush a space between the two shuttles and to check that the two shuttles have correctly closed each side of the fluid.

8. The valve assembly (10) of any of claims 6 or 7 wherein the first and second valves are clamped together.

9. The valve assembly (10) of claim 8, wherein the clamps are arranged to separate at a predetermined breakout force.

10. The valve assembly (10) of claim 9, wherein each valve includes an actuator to move the shuttle within the valve body and the actuator is arranged to automatically actuate the actuator to close the valves on separation of the valve assembly.

11. A method of closing a valve (20) by moving a shuttle (120) within a valve body (22) transverse a fluid passageway (60) from an open position to a closed position, wherein when the shuttle (120) is in the closed position, the passageway is plugged by movement of a first tablet (140) relative to the shuttle (120) in an axial direction of the fluid passageway and by movement of a second tablet (240) relative to the shuttle (120) in an opposed axial direction, wherein one of the tablets includes apertures (149) and the method comprises enabling fluid to pass around or through said tablet,
**characterised by** a resilient member between the first tablet and the second tablet biasing the first tablet and the second tablet apart.

12. The method of claim 11, wherein a step of moving the tablets (140, 240) in respective reverse axial directions comprises causing a tapered surface of the tablets to bear against the valve body when the shuttle is moved from the closed position to the open position, wherein said bearing causes the tablets to move against a biasing force.

## Patentansprüche

1. Ventil (20), umfassend:
einen Ventilkörper (22) mit einem Durchgang (60) dort hindurch, der eine axiale Richtung definiert;
einen Schaltkörper (120), montiert im Inneren des Ventilkörpers (22) und in der Lage, sich in einem Winkel zu der axialen Richtung von einer offenen Position in eine geschlossene Position zu bewegen;
wobei, in der offenen Position, der Schaltkörper (120) den Durchgang nicht schließt, und, in der geschlossenen Position, der Schaltkörper (120) angeordnet ist, eine erste Tafel (140) innerhalb des Fluiddurchgangs (60) zu lokalisieren;
wobei die erste Tafel (140) bewegbar an dem Schaltkörper (120) montiert und vorgespannt ist, um sich in der axialen Richtung zu bewegen, um gegen eine Dichtfläche des Ventilkörpers eine Abdichtung herzustellen, um den Durchgang zu schließen;
wobei der Schaltkörper eine zweite Tafel (240) trägt, wobei die Tafeln in der axialen Richtung einzeln vorgespannt sind, um gegen einander gegenüberliegende Dichtflächen in dem Ventilkörper (22) eine Abdichtung herzustellen,
**dadurch gekennzeichnet, dass**
eine der Tafeln (140, 240) Öffnungen (149) beinhaltet, um Fluid zu gestatten rings um oder durch die Tafel zu strömen, und
ein elastisches Element zwischen der ersten Tafel und der zweiten Tafel angeordnet ist, um die erste Tafel und die zweite Tafel einzeln vorzuspannen.

2. Ventil (20) nach einem der vorangehenden Ansprüche, wobei eine oder beide Tafeln eine vorstehende Fläche und eine Dichtfläche beinhalten, wobei die vorstehende Fläche vor der Dichtfläche in der axialen Richtung vorsteht.

3. Ventil (20) nach Anspruch 2, wobei eine Übergangsfläche zwischen der vorstehenden Fläche und der Dichtfläche so angeordnet ist, dass sie an dem Ventilkörper (22) anliegt, um die Tafel gegen die Vorspannkraft in der entgegengesetzten axialen Richtung zu bewegen, wenn der Schaltkörper (120) von der geschlossenen Position in die offene Position bewegt wird.

4. Ventil (20) nach einem der vorangehenden Ansprüche, wobei eine hintere Fläche einer oder beider Tafeln verzahnt ist.

5. Ventil nach einem der vorangehenden Ansprüche, wobei der Schaltkörper (120) durch einen Aktuator relativ zu dem Ventilkörper (22) bewegbar ist.

6. Ventilanordnung (10), umfassend ein erstes (20) und zweites (30) Ventil, wobei jedes Ventil wie in einem der vorangehenden Ansprüche beansprucht ist.

7. Ventilanordnung (10) nach Anspruch 6, wobei ein erstes und zweites Entlüftungsloch durch die Ventilkörper bereitgestellt sind, sodass sie sich im Austausch mit dem Raum zwischen den zwei Schaltkörpern befinden, um einen Raum zwischen den zwei Schaltkörpern zu spülen und zu prüfen, ob die beiden Schaltkörper jede Seite des Fluides korrekt abgeschlossen haben.

8. Ventilanordnung (10) nach einem der Ansprüche 6 oder 7, wobei das erste und zweite Ventil zusammengeklemmt sind.

9. Ventilanordnung (10) nach Anspruch 8, wobei die Klemmstücke angeordnet sind, um sich bei einer vorbestimmten Ausbrechkraft zu trennen.

10. Ventilanordnung (10) nach Anspruch 9, wobei jedes Ventil einen Aktuator beinhaltet, um den Schaltkörper innerhalb des Ventilkörpers zu bewegen, und der Aktuator angeordnet ist, um den Aktuator automatisch zu betätigen, um die Ventile bei Trennung der Ventilanordnung zu schließen.

11. Verfahren zum Schließen eines Ventils (20) durch Bewegen eines Schaltkörpers (120) innerhalb eines Ventilkörpers (22) quer zu einem Fluiddurchgang (60) von einer offenen Position in eine geschlossene Position, wobei dann, wenn sich der Schaltkörper (120) in der geschlossenen Position befindet, der Durchgang durch Bewegung einer ersten Tafel (140) relativ zu dem Schaltkörper (120) in einer axialen Richtung des Fluiddurchgangs und durch Bewegung einer zweiten Tafel (240) relativ zu dem Schaltkörper (120) in einer entgegengesetzten axialen Richtung verschlossen wird, wobei eine der Tafeln Öffnungen (149) beinhaltet und das Verfahren umfasst, Fluid zu ermöglichen, um oder durch die Tafel zu strömen,
**gekennzeichnet durch** ein elastisches Element zwischen der ersten Tafel und der zweiten Tafel, welches die erste Tafel und die zweite Tafel getrennt vorspannt.

12. Verfahren nach Anspruch 11, wobei ein Schritt des Bewegens der Tafeln (140, 240) in entsprechenden umgekehrten axialen Richtungen umfasst, eine sich verjüngende Fläche der Tafeln zu veranlassen, am Ventilkörper anzuliegen, wenn der Schaltkörper von der geschlossenen Position in die offene Position bewegt wird, wobei das Anliegen die Tafeln veranlasst, sich gegen eine Vorspannkraft zu bewegen.

## Revendications

1. Clapet (20) comprenant :
un corps de clapet (22) traversé par un passage (60) définissant une direction axiale ;
une navette (120), montée à l'intérieur du corps de clapet (22) et capable de se déplacer d'une position ouverte à une position fermée selon un angle par rapport à la direction axiale ;
dans lequel, en position ouverte, la navette (120) ne ferme pas le passage et dans la position fermée, la navette (120) est agencée pour placer une première tablette (140) dans le passage de fluide (60) ;
la première tablette (140) étant montée de manière mobile sur la navette (120) et sollicitée pour se déplacer dans la direction axiale afin d'assurer l'étanchéité contre une surface d'étanchéité du corps de clapet pour fermer le passage ;
dans lequel la navette porte une seconde tablette (240), les tablettes étant écartées dans la direction axiale pour assurer l'étanchéité contre des surfaces d'étanchéité opposées dans le corps de clapet (22)
**caractérisé en ce que**
l'une des tablettes (140, 240) comporte des ouvertures (149) pour permettre au fluide de circuler autour ou à travers ladite tablette, et
un élément élastique est disposé entre la première tablette et la seconde tablette pour écarter les première et seconde tablettes l'une de l'autre.

2. Clapet (20) selon l'une quelconque des revendications précédentes, dans lequel l'une ou les deux tablettes comprennent une surface saillante et une surface d'étanchéité, dans lequel la surface saillante fait saillie en avant de la surface d'étanchéité dans la direction axiale.

3. Clapet (20) selon la revendication 2, dans lequel une surface de transition entre la surface saillante et la surface d'étanchéité est agencée pour s'appuyer contre le corps de clapet (22) pour déplacer ladite tablette contre la force de sollicitation dans la direction axiale opposée lorsque la navette (120) est déplacée de la position fermée à la position ouverte.

4. Clapet (20) selon l'une quelconque des revendications précédentes dans lequel une surface arrière d'une ou des deux tablettes est moulée.

5. Clapet selon l'une quelconque des revendications précédentes, dans lequel la navette (120) peut être déplacée par rapport au corps de clapet (22) par un actionneur.

6. Ensemble clapet (10) comprenant des premier (20) et second (30) clapets, dans lequel chaque clapet est tel que revendiqué dans l'une quelconque des revendications précédentes.

7. Ensemble clapet (10) selon la revendication 6, dans lequel des premier et second trous de purge sont prévus à travers les corps de clapet de manière à être en communication avec l'espace entre les deux navettes afin de rincer un espace entre les deux navettes et de vérifier que les deux navettes ont correctement fermé chaque côté du fluide.

8. Ensemble clapet (10) selon l'une quelconque des revendications 6 ou 7, dans lequel les premier et second clapets sont serrés ensemble.

9. Ensemble clapet (10) selon la revendication 8, dans lequel les colliers de serrage sont agencés pour se séparer à une force d'arrachement prédéterminée.

10. Ensemble clapet (10) selon la revendication 9, dans lequel chaque clapet comprend un actionneur pour déplacer la navette à l'intérieur du corps de clapet et l'actionneur est agencé pour actionner automatiquement l'actionneur pour fermer les clapets lors de la séparation de l'ensemble clapet.

11. Procédé de fermeture d'un clapet (20) par déplacement d'une navette (120) à l'intérieur d'un corps de clapet (22) transversalement à un passage de fluide (60) d'une position ouverte à une position fermée, dans lequel lorsque la navette (120) est dans la position fermée, le passage est bouché par le mouvement d'une première tablette (140) par rapport à la navette (120) dans une direction axiale du passage de fluide et par le mouvement d'une seconde tablette (240) par rapport à la navette (120) dans une direction axiale opposée, dans lequel l'une des tablettes comprend des ouvertures (149) et le procédé comprend l'étape consistant à permettre au fluide de passer autour ou à travers ladite tablette,
**caractérisé par** un élément élastique entre la première tablette et la seconde tablette écartant les première et seconde tablettes l'une de l'autre.

12. Procédé selon la revendication 11, dans lequel une étape consistant à déplacer les tablettes (140, 240) dans des directions axiales inverses respectives consiste à faire en sorte qu'une surface conique des tablettes s'appuie contre le corps de clapet lorsque la navette est déplacée de la position fermée à la position ouverte, dans lequel ledit appui fait déplacer les tablettes contre une force de sollicitation.
